# FASCICULE DE BREVET EUROPEEN

(11) **EP 3 867 565 B1**
(45) Date de publication et mention de la délivrance du brevet: **26.10.2022**
(21) Numéro de dépôt: 19801937.4
(22) Date de dépôt: 27.09.2019
(51) Int. Cl.: F21S 43/239, F21S 43/14, F21S 41/14, B60Q 1/26, F21Y 113/10, F21Y 115/10, F21W 103/55, F21W 103/20

(54) **MODULE LUMINEUX BI-FONCTION POUR BLOC OPTIQUE D'ÉCLAIRAGE ET/OU DE SIGNALISATION DE VÉHICULE**
LEUCHTMODUL MIT ZWEI FUNKTIONEN FÜR EINE OPTISCHE BELEUCHTUNGS- UND/ODER SIGNALEINHEIT EINES FAHRZEUGS
DUAL-FUNCTION LUMINOUS MODULE FOR AN OPTICAL VEHICLE LIGHTING AND/OR SIGNALLING UNIT

(30) Priorité: 17.10.2018 FR 1859585
(43) Date de publication de la demande: 25.08.2021
(73) Titulaire: PSA Automobiles SA, 78300 Poissy (FR)
(72) Inventeur: PERON, Rodolphe, 95220 Herblay (FR); MOYNIER, Gilles, 72000 Le Mans (FR); LARRIBEAU, Nathalie, 78310 Maurepas (FR); POILANE, Philippe, 92160 Antony (FR)
(86) Numéro de dépôt international: PCT/FR2019/052292
(87) Numéro de publication internationale: WO 2020/079338

(56) Documents cités:
- EP-A1- 3 208 535
- EP-A2- 2 354 637
- CN-U- 205 991 406
- DE-A1-102011 009 100
- FR-A1- 3 042 258
- US-A1- 2015 219 818

## Description

### Domaine technique

La présente invention concerne d'une manière générale le domaine des blocs optiques d'éclairage et de signalisation pour véhicules automobiles. Elle vise en particulier un module lumineux d'un tel bloc optique apte à assurer deux fonctions d'éclairage et/ou de signalisation différentes.

### Technique antérieure

Les exigences réglementaires en matière de signalisation des véhicules automobiles ont évoluées ces dernières années et imposent désormais la présence à l'avant des véhicule de modules lumineux aptes à assurer la fonction feu diurne, couramment désignée sous l'acronyme anglais DRL (pour « Daytime Running Light »).

Cette fonction feu diurne dont la couleur d'émission lumineuse est blanche, doit être activée automatiquement dès lors que le véhicule se déplace vers l'avant et que les feux de route ou de croisement sont éteints afin d'accroître sa visibilité dans des conditions de lumière du jour.

De manière courante, les modules lumineux assurant cette fonction feu diurne comprennent une pluralité de diodes électroluminescentes, couramment désignées sous l'acronyme anglais LED (pour « Light Emitting Diodes ») et considérées désormais comme une alternative avantageuse aux ampoules à incandescence en termes d'encombrement, de baisse de consommation d'énergie électrique, d'augmentation de la durée de vie et de liberté de style.

Ces diodes électroluminescentes sont implantées sur une carte à circuits imprimés désignée couramment sous l'acronyme anglais PCB (pour « Printed Circuit Board ») et intégrant un dispositif de commande.

De telles diodes ont toutefois pour inconvénient de présenter un grand angle d'éclairage, ce qui engendre une large diffusion et beaucoup de pertes dans une application visant à éclairer une zone éloignée.

Aussi, il est connu de les associer à un guide de lumière comportant un corps transparent sensiblement plat et apte à transférer les rayons lumineux qui alimentent sa surface d'entrée vers une face avant de sortie.

La présence de tels guides augmente considérablement le volume des modules lumineux assurant la fonction feu diurne de sorte que leur intégration dans les blocs d'éclairage et de signalisation avant s'avère souvent impossible.

Ces modules sont alors intégrés dans des blocs optiques spécifiques implantés dans la calandre et surplombant les blocs optiques d'éclairage et de signalisation avant.

Afin de limiter l'encombrement de la face avant du véhicule par une multitudes de blocs optiques, il est connu, d'intégrer dans un même module lumineux les fonctions feu diurne et feu indicateur de direction.

Cette dernière fonction, mise en œuvre de manière manuelle via un organe de commande pour signaler la volonté du conducteur de changer la direction du véhicule, doit également respecter une certaine couleur d'émission lumineuse (en l'occurrence, ambre ou jaune).

En outre, les exigences réglementaires imposent que les feux diurnes s'éteignent qu'un feu indicateur de direction est actionné par l'utilisateur de sorte à le rendre plus visible des autres usagers.

La demande de brevet européenne EP 2 161 494 divulgue ainsi un module lumineux pour bloc optique de véhicule comportant une première série et une seconde série de diodes électroluminescentes émettant respectivement des rayons lumineux de couleur ambre et de couleur blanche.

Les deux séries de diodes sont implantées sur un PCB en regard de la tranche arrière d'un corps transparent sensiblement plat d'un guide optique qui reçoit les rayons lumineux de couleurs différentes provenant desdites diodes et les guide vers sa tranche avant de sortie.

Lors du démarrage du véhicule, la seconde série de diodes à lumière blanche s'allume automatiquement de manière à assurer la fonction feu diurne. Dès lors que le conducteur actionne l'organe de commande traduisant sa volonté de changer la direction du véhicule, cette seconde série de diodes est automatiquement éteinte tandis que la première série de diodes à lumière ambre ou jaune s'allume de sorte à assurer la fonction d'indicateur de direction.

Toutefois, l'étroitesse de la tranche arrière du corps transparent empêche de disposer en regard de sa surface un nombre suffisant de diodes d'une même couleur ou des éléments optiques diffusants de sorte que la lumière diffusée en sortie du module s'avère non homogène (présence de « points chauds »). FR 3 042 258 A1 divulgue un autre module lumineux connu de l'art antérieur.

### Exposé de l'invention

La présente invention vise donc à améliorer la situation.

Elle propose à cet effet un module lumineux pour bloc optique d'éclairage et/ou de signalisation de véhicule automobile, comportant des premiers moyens d'émission de rayons lumineux d'une première couleur et des seconds moyens d'émission de rayons lumineux d'une seconde couleur agencés sur une même plaque support, ainsi qu'un guide de lumière comprenant un corps transparent sensiblement plat apte à recevoir lesdits rayons lumineux de couleurs différentes provenant desdits premier et second moyens lumineux et à les guider vers une même face avant de sortie ;
le corps transparent s'étendant perpendiculairement à la plaque support, son plan moyen se confondant avec le plan longitudinal médian de cette même plaque support,
lesdits premiers et seconds moyens d'émission présentant des axes d'émission sensiblement perpendiculaires au plan moyen dudit corps transparent, en étant agencés respectivement de part et d'autre dudit corps transparent de sorte que leurs rayons lumineux pénètrent dans ce corps par deux faces d'entrées opposées de ce dernier.

Un tel agencement permet ainsi de prévoir un nombre plus important de premiers et seconds moyens d'émission et/ou de ménager des éléments optiques diffusants entre le corps transparent et ces moyens d'émissions de sorte à obtenir une luminosité homogène au niveau de la face avant de sortie.

Selon des caractéristiques préférées dudit module lumineux selon l'invention, prises seules ou en combinaison :
- lesdits premier et second moyens d'émission sont constitués respectivement par une première série de diodes électroluminescentes ou laser aptes à émettre des rayons lumineux de ladite première couleur, et par une seconde série de diodes électroluminescentes ou laser aptes à émettre des rayons lumineux de ladite seconde couleur ;
- ledit guide de lumière comprend une pluralité d'éléments optiques diffusants, interposés entre lesdites diodes et ledit corps transparent de sorte à éclater les rayons lumineux issus de chaque diode en un cône d'émission plus homogène ;
- lesdits éléments optiques diffusants sont de forme tronconique et saillent transversalement dudit corps transparent en s'étranglant, chaque dite diode étant disposée en regard de l'extrémité externe d'un dit élément optique diffusant correspondant ;
- l'extrémité externe de chaque dit élément optique diffusant porte un collimateur optique apte à concentrer le faisceau lumineux issu de la diode correspondante avant son entrée dans cet élément optique ;
- les diodes formant ladite première série et celles formant ladite seconde série sont respectivement alignées selon deux axes parallèles entre eux ainsi qu'au plan moyen dudit corps transparent ;
- ledit corps transparent est imbriqué sur ladite plaque support ;
- ledit corps transparent comporte une pluralité de pattes de fixation saillant de part et d'autre dudit corps transparent, chaque dite patte comprenant un pion respectif traversant un orifice correspondant ménagé dans ladite plaque support et dont l'extrémité libre est bouterollée par rivetage à chaud lors du montage dudit guide de lumière sur cette plaque support de sorte à solidariser rigidement ces deux éléments ; et/ou
- ladite plaque support est formée une carte à circuits imprimés intégrant un dispositif de commande apte à gérer l'allumage et l'extinction des premiers et seconds moyens d'émission.

L'invention concerne également sous un second aspect, un bloc optique d'éclairage et/ou de signalisation de véhicule, caractérisé en ce qu'il comporte au moins un tel module lumineux.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] est une vue en perspective d'un module lumineux selon l'invention destiné à être intégré dans un bloc optique d'éclairage et/ou de signalisation pour véhicule ;
- [Fig 2] représente une vue en perspective de la carte à circuits imprimés du module lumineux de la figure 1 ;
- [Fig 3] est un agrandissement d'une portion du guide de lumière du module lumineux de la figure 1 ; et
- [Fig 4] représente une vue en élévation de côté du module lumineux de la figure 1.

### Description détaillée

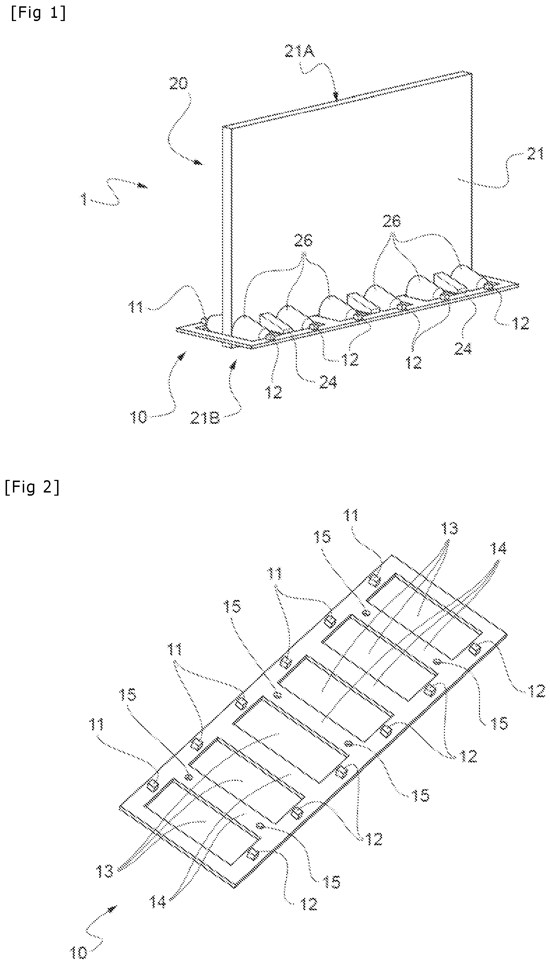

La figure 1 représente un module lumineux 1 selon l'invention destiné à être intégré dans un bloc optique avant de signalisation de véhicule automobile pour assurer les fonctions feu diurne et feu indicateur de changement de direction.

Le module lumineux 1 selon l'invention comporte une plaque support 10 montrée seule sur la figure 2, cette plaque portant des premiers moyens d'émission 11 de rayons lumineux de couleur ambre destinés à assurer la fonction feu indicateur de changement de direction, ainsi que des seconds moyens d'émission 12 de rayons lumineux de couleur blanche destinés à assurer la fonction feu diurne.

Ce module lumineux 1 comporte également un guide de lumière 20 comportant un corps transparent sensiblement plat 21 apte à recevoir les rayons lumineux de couleurs différentes provenant des premier et seconds moyens lumineux et à les guider vers une même face de sortie 21A correspondant en l'espèce à la tranche avant du corps 21 prévue pour être positionnée en regard de la glace de couverture du bloc optique.

De forme rectangulaire, le corps 21 s'étend perpendiculairement à la plaque support 10, son plan moyen se confondant avec le plan longitudinal médian de cette même plaque support 10.

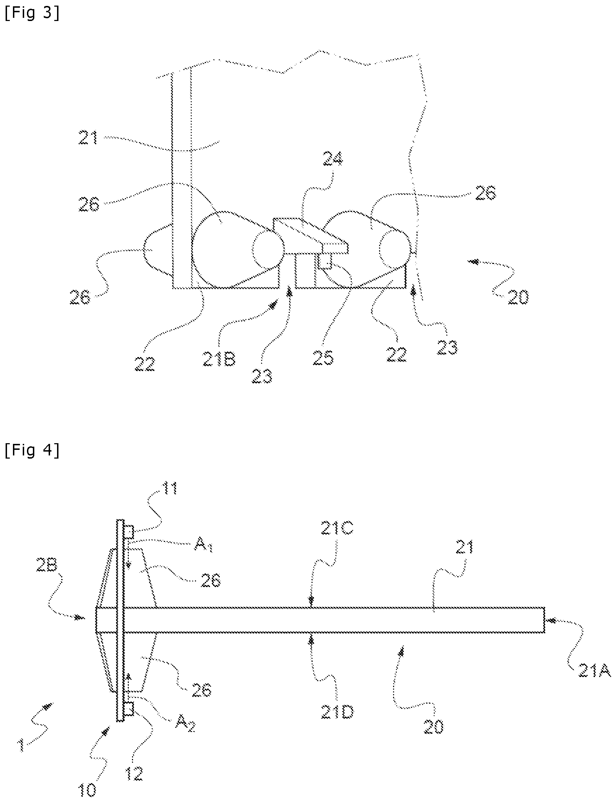

Comme illustré sur la figure 3, sa zone arrière 21B, située à opposée de sa tranche avant 21A, présente un profil crénelé constitué d'une pluralité de créneaux 22 (en l'espèce : six) séparés par des échancrures rectangulaires 23.

Tel que cela est bien visible sur la figure 4, cette zone arrière 21B du corps 21 est imbriquée sur la plaque support 10, les créneaux 22 traversant une pluralité de découpes rectangulaires respectives 13 ménagées dans cette plaque support 10 et étant séparées les unes des autres par des bandes 14 contre lesquelles reposent les sommets des échancrures 23.

Le guide de lumière 20 comporte également une pluralité de pattes de fixation 24 (en l'espèce, trois) saillant transversalement de part et d'autre de la zone arrière 21B du corps 21 au dessus de certaines échancrures 23.

Tel qu'illustré par la figure 3, les pattes de fixation 24 comprennent chacune un pion respectif 25 traversant un orifice correspondant 15 ménagé dans une bande 14 de la plaque support 10 et dont l'extrémité libre est bouterollée par rivetage à chaud lors du montage du guide 20 sur cette plaque support 10 de sorte à solidariser rigidement ces deux éléments.

Comme cela est bien visible sur les figures 1 et 3, le guide de lumière 20 comprend en outre une pluralité d'éléments optiques diffusants 26 de forme tronconique saillant transversalement en s'étranglant, de part et d'autre des créneaux 22 de la zone arrière 21B du corps 21, et traversant les découpes rectangulaires 13 ménagées dans la plaque support 10.

De manière avantageuse, ce guide de lumière 20 est réalisé d'une seule pièce par moulage à partir d'un matériau thermoplastique transparent tel que le polycarbonate (PC) ou le polyméthacrylate de méthyle (PMMA).

Tel qu'illustré par la figure 4, les premiers et seconds moyens d'émission 11, 12 présentent des axes d'émission A₁, A₂ sensiblement perpendiculaires au plan moyen du corps transparent 21, en étant agencés respectivement de part et d'autre de ce corps 21 de sorte que leurs rayons lumineux y pénètrent par deux faces d'entrées opposées constituées par les deux faces principales 21C, 21D de ce corps 21.

Les premiers moyens d'émission 11 sont constitués par une première série de six diodes lumineuses électroluminescentes (LEDS) ou laser de couleur ambre, alignées à proximité et le long d'un premier bord longitudinal de la plaque support 10 selon un axe parallèle au plan moyen du corps transparent 21.

Les seconds moyens d'émission 12 sont constitués par une seconde série de six diodes lumineuses électroluminescentes (LEDS) ou laser de couleur blanche, alignées à proximité et le long d'un second bord longitudinal de la plaque support 10 selon un axe parallèle à celui de la première série de diodes 11 et au plan moyen du corps transparent 21.

La plaque support 10 est formée par une carte à circuits imprimés de type PCB (pour « Printed Circuit Board ») intégrant un dispositif de commande non représenté apte à gérer l'allumage et l'extinction des première et seconde séries de diodes 11, 12.

Tel qu'illustré par la figure 4, chaque diode 11, 12 est disposée en regard de l'extrémité externe libre d'un élément optique diffusant correspondant 26.

Lorsque la première ou la seconde série de diodes 11, 12 est activée, les rayons lumineux émis par chaque diode de la série correspondante traversent tout d'abord un élément optique tronconique correspondant 26, puis pénètrent dans le corps transparent 21 par l'une de ses faces principales 21C, 21D à l'intérieur duquel ils sont réfléchis à plusieurs reprises et transférés vers sa tranche avant de sortie 21A.

Ces éléments optiques 26, interposés entre les diodes 11, 12 et le corps transparent 21, ont pour fonction d'éclater les rayons lumineux issus de chaque diode en un cône d'émission plus homogène de sorte à éviter l'apparition de points chauds en sortie.

Le dispositif de commande est configuré de sorte à actionner automatiquement l'allumage de la seconde série de diodes blanches 12 au démarrage du véhicule, afin d'assurer la fonction feu diurne.

Ce dispositif est également configuré de sorte à éteindre cette seconde série de diodes blanches 12 et à allumer la première série de diodes ambre 11 dès lors que le conducteur actionne l'organe de commande traduisant sa volonté de changer la direction du véhicule, afin d'assurer la fonction feu indicateur de changement de direction.

Selon des variantes de réalisation non représentées, l'extrémité externe de chaque élément optique diffusant 26 porte un collimateur optique constitué par exemple par un prisme et permettant de concentrer le faisceau lumineux issu de la diode correspondante 11, 12 avant son entrée dans cet élément optique 26.

Selon d'autres variantes de réalisation non représentées, la plaque support et le guide de lumière sont conformés différemment. En particulier, les éléments optiques diffuseurs tronconiques peuvent être remplacés par deux barreaux de section trapézoïdale s'étendant respectivement le long et de part et d'autre de la zone arrière du corps transparent.

Selon d'autres variantes de réalisation non représentées, le nombre et/ou la couleur des diodes peuvent également être différents.

D'une manière générale, on rappelle que la présente invention ne se limite pas aux formes de réalisation décrites et représentées, mais englobe toute variante d'exécution à la portée de l'homme du métier.

## Revendications

1. Module lumineux pour bloc optique d'éclairage et/ou de signalisation de véhicule automobile, comportant des premiers moyens d'émission de rayons lumineux d'une première couleur (11) et des seconds moyens d'émission de rayons lumineux d'une seconde couleur (12) agencés sur une même plaque support (10), ainsi qu'un guide de lumière (20) comprenant un corps transparent sensiblement plat (21) apte à recevoir lesdits rayons lumineux de couleurs différentes provenant desdits premier et second moyens lumineux (11, 12) et à les guider vers une même face avant de sortie (21A) ; le corps transparent (21) s'étendant perpendiculairement à la plaque support (10), son plan moyen se confondant avec le plan longitudinal médian de cette même plaque support, **caractérisé en ce que** lesdits premiers et seconds moyens d'émission (11, 12) présentent des axes d'émission (A₁, A₂) sensiblement perpendiculaires au plan moyen dudit corps transparent (21), en étant agencés respectivement de part et d'autre dudit corps transparent (21) de sorte que leurs rayons lumineux pénètrent dans ce corps par deux faces d'entrées opposées (21C, 21D) de ce dernier.

2. Module lumineux selon la revendication 1, **caractérisé en ce que** lesdits premier et second moyens d'émission sont constitués respectivement par une première série de diodes électroluminescentes ou laser (11) aptes à émettre des rayons lumineux de ladite première couleur, et par une seconde série de diodes électroluminescentes ou laser (12) aptes à émettre des rayons lumineux de ladite seconde couleur.

3. Module lumineux selon la revendication 2, **caractérisé en ce que** ledit guide de lumière (20) comprend une pluralité d'éléments optiques diffusants (26), interposés entre lesdites diodes (11, 12) et ledit corps transparent (21) de sorte à éclater les rayons lumineux issus de chaque diode en un cône d'émission plus homogène.

4. Module lumineux selon la revendication 3, **caractérisé en ce que** lesdits éléments optiques diffusants (26) sont de forme tronconique et saillent transversalement dudit corps transparent en s'étranglant, chaque dite diode (11, 12) étant disposée en regard de l'extrémité externe d'un dit élément optique diffusant correspondant (26).

5. Module lumineux selon la revendication 4, **caractérisé en ce que** l'extrémité externe de chaque dit élément optique diffusant porte un collimateur optique apte à concentrer le faisceau lumineux issu de la diode correspondante avant son entrée dans cet élément optique.

6. Module lumineux selon l'une des revendications 2 à 5, **caractérisé en ce que** les diodes formant ladite première série (11) et celles formant ladite seconde série (12) sont respectivement alignées selon deux axes parallèles entre eux ainsi qu'au plan moyen dudit corps transparent (21).

7. Module lumineux selon l'une des revendications 1 à 6, **caractérisé en ce que** ledit corps transparent (21) est imbriqué sur ladite plaque support (10).

8. Module lumineux selon l'une des revendications 1 à 7, **caractérisé en ce que** ledit corps transparent (21) comporte une pluralité de pattes de fixation (24) saillant de part et d'autre dudit corps transparent (21), chaque dite patte (24) comprenant un pion respectif (25) traversant un orifice correspondant (15) ménagé dans ladite plaque support (10) et dont l'extrémité libre est bouterollée par rivetage à chaud lors du montage dudit guide de lumière (20) sur cette plaque support (10) de sorte à solidariser rigidement ces deux éléments.

9. Module lumineux selon l'une des revendications 1 à 8, **caractérisé en ce que** ladite plaque support (10) est formée une carte à circuits imprimés intégrant un dispositif de commande apte à gérer l'allumage et l'extinction des premiers et seconds moyens d'émission.

10. Bloc optique d'éclairage et/ou de signalisation de véhicule, **caractérisé en ce qu'**il comporte au moins un module lumineux selon l'une des revendications 1 à 9.

## Patentansprüche

1. Leuchtmodul für eine optische Einheit zur Beleuchtung und/oder Signalisierung eines Kraftfahrzeugs, mit ersten Mitteln zum Aussenden von Lichtstrahlen einer ersten Farbe (11) und zweiten Mitteln zum Aussenden von Lichtstrahlen einer zweiten Farbe (12), die auf derselben Trägerplatte (10) angeordnet sind, sowie einem Lichtleiter (20), der einen im Wesentlichen flachen transparenten Körper (21) umfasst, der die von den ersten und zweiten Leuchtmitteln (11, 12) kommenden Lichtstrahlen unterschiedlicher Farben empfangen und sie zu derselben vorderen Austrittsfläche (21A) führen kann; wobei sich der transparente Körper (21) senkrecht zur Trägerplatte (10) erstreckt und seine Mittelebene mit der mittleren Längsebene derselben Trägerplatte zusammenfällt, **dadurch gekennzeichnet, dass** die ersten und zweiten Emissionsmittel (11, 12) Emissionsachsen (A1, A2) aufweisen, die im Wesentlichen senkrecht zur Mittelebene des transparenten Körpers (21) stehen, indem sie jeweils auf beiden Seiten des transparenten Körpers (21) so angeordnet sind, dass ihre Lichtstrahlen in diesen Körper durch zwei gegenüberliegende Eingangsflächen (21C, 21D) des letzteren eintreten.

2. . Leuchtmodul nach Anspruch 1, **dadurch gekennzeichnet, dass** die ersten und zweiten Emissionsmittel jeweils aus einer ersten Reihe von Leucht- oder Laserdioden (11), die Lichtstrahlen der ersten Farbe emittieren können, und aus einer zweiten Reihe von Leucht- oder Laserdioden (12), die Lichtstrahlen der zweiten Farbe emittieren können, gebildet sind.

3. . Leuchtmodul nach Anspruch 2, **dadurch gekennzeichnet, dass** der Lichtleiter (20) eine Vielzahl von streuenden optischen Elementen (26) umfasst, die zwischen den Dioden (11, 12) und dem transparenten Körper (21) so angeordnet sind, dass die von jeder Diode ausgehenden Lichtstrahlen in einen homogeneren Emissionskegel aufgespalten werden.

4. . Leuchtmodul nach Anspruch 3, **dadurch gekennzeichnet, dass** die streuenden optischen Elemente (26) kegelstumpfförmig sind und quer aus dem transparenten Körper hervorstehen, indem sie sich verengen, wobei jede besagte Diode (11, 12) gegenüber dem äußeren Ende eines entsprechenden besagten streuenden optischen Elements (26) angeordnet ist.

5. . Leuchtmodul nach Anspruch 4, **dadurch gekennzeichnet, dass** das äußere Ende jedes besagten streuenden optischen Elements einen optischen Kollimator trägt, der geeignet ist, den von der entsprechenden Diode ausgehenden Lichtstrahl vor seinem Eintritt in dieses optische Element zu fokussieren.

6. . Leuchtmodul nach einem der Ansprüche 2 bis 5, **dadurch gekennzeichnet, dass** die Dioden, die die erste Reihe (11) bilden, und die Dioden, die die zweite Reihe (12) bilden, jeweils entlang zweier Achsen ausgerichtet sind, die parallel zueinander sowie zur Mittelebene des transparenten Körpers (21) verlaufen.

7. . Leuchtmodul nach einem der Ansprüche 1 bis 6, **dadurch gekennzeichnet, dass** der transparente Körper (21) mit der Trägerplatte (10) verschachtelt ist.

8. . Leuchtmodul nach einem der Ansprüche 1 bis 7, **dadurch gekennzeichnet, dass** der transparente Körper (21) eine Vielzahl von Befestigungslaschen (24) aufweist, die auf beiden Seiten des transparenten Körpers (21) vorstehen, wobei jede dieser Laschen (24) einen jeweiligen Stift (25) umfasst, der durch eine entsprechende Öffnung (15) in der Trägerplatte (10) verläuft und dessen freies Ende bei der Montage des Lichtleiters (20) auf dieser Trägerplatte (10) durch Heißnieten festgeklebt wird, so dass diese beiden Elemente starr miteinander verbunden sind.

9. . Leuchtmodul nach einem der Ansprüche 1 bis 8, **dadurch gekennzeichnet, dass** die Trägerplatte (10) als gedruckte Leiterplatte ausgebildet ist, die eine Steuervorrichtung integriert, die geeignet ist, das Ein- und Ausschalten der ersten und zweiten Sendemittel zu steuern.

10. . Optische Einheit zur Beleuchtung und/oder Signalisierung eines Fahrzeugs, **dadurch gekennzeichnet, dass** sie mindestens ein Leuchtmodul nach einem der Ansprüche 1 bis 9 umfasst.

## Claims

1. A light module for a motor vehicle lighting and/or signalling optical unit, comprising first means for emitting light rays of a first color (11) and second means for emitting light rays of a second color (12) arranged on the same support plate (10), as well as a light guide (20) comprising a substantially flat transparent body (21) capable of receiving said light rays of different colors coming from said first and second light means (11, 12) and of guiding them towards the same front output face (21A) ; the transparent body (21) extending perpendicularly to the support plate (10), its mean plane merging with the median longitudinal plane of this same support plate, **characterized in that** the said first and second emission means (11, 12) have emission axes (A1, A2) substantially perpendicular to the mean plane of the said transparent body (21), being arranged respectively on either side of the said transparent body (21) in such a way that their light rays penetrate this body via two opposite input faces (21C, 21D) of the latter.

2. Luminous module according to claim 1, **characterized in that** said first and second emission means are constituted respectively by a first series of light-emitting diodes or lasers (11) capable of emitting light rays of said first color, and by a second series of light-emitting diodes or lasers (12) capable of emitting light rays of said second color.

3. Luminous module according to claim 2, **characterized in that** said light guide (20) comprises a plurality of diffusing optical elements (26), interposed between said diodes (11, 12) and said transparent body (21) so as to split the light rays coming from each diode into a more homogeneous emission cone.

4. Luminous module according to claim 3, **characterized in that** said diffusing optical elements (26) are of truncated cone shape and protrude transversely from said transparent body by constricting, each said diode (11, 12) being arranged facing the external end of a corresponding said diffusing optical element (26).

5. Luminous module according to claim 4, **characterized in that** the outer end of each said diffusing optical element carries an optical collimator capable of concentrating the light beam coming from the corresponding diode before it enters this optical element.

6. Luminous module according to one of claims 2 to 5, **characterized in that** the diodes forming said first series (11) and those forming said second series (12) are respectively aligned along two axes parallel to each other and to the mean plane of said transparent body (21).

7. Luminous module according to one of claims 1 to 6, **characterized in that** said transparent body (21) is imbricated on said support plate (10).

8. Luminous module according to one of claims 1 to 7, **characterized in that** said transparent body (21) comprises a plurality of fixing lugs (24) projecting on either side of said transparent body (21), each said lug (24) comprising a respective pin (25) passing through a corresponding orifice (15) provided in said support plate (10) and the free end of which is riveted by hot riveting during the mounting of said light guide (20) on this support plate (10) so as to rigidly join these two elements.

9. Light module according to one of claims 1 to 8, **characterized in that** said support plate (10) is formed by a printed circuit board integrating a control device able to manage the switching on and off of the first and second emission means.

10. Vehicle lighting and/or signalling optical unit, **characterized in that** it comprises at least one light module according to one of claims 1 to 9.
